# FASCICULE DE BREVET EUROPEEN

(11) **EP 2 460 312 B1**
(45) Date de publication et mention de la délivrance du brevet: **18.01.2017**
(21) Numéro de dépôt: 10736703.9
(22) Date de dépôt: 23.07.2010
(51) Int. Cl.: H04L 12/66, H04L 12/12

(54) **PROCÉDÉ POUR METTRE EN VEILLE ET RÉVEILLER UNE PASSERELLE DOMESTIQUE SELON DES PLAGES HORAIRES PROGRAMMABLES**
VERFAHREN FÜR DIE VERSETZUNG EINES RESIDENTIAL GATEWAY IN DEN STANDBY-MODUS UND SEINE RÜCKHOLUNG NACH PROGRAMMIERBAREN ZEITSCHLITZEN
METHOD FOR PLACING IN STANDBY AND WAKING UP A RESIDENTIAL GATEWAY ACCORDING TO PROGRAMMABLE TIME SLOTS

(30) Priorité: 27.07.2009 FR 0955253
(43) Date de publication de la demande: 06.06.2012
(73) Titulaire: SAGEMCOM BROADBAND SAS, 92500 Rueil Malmaison (FR)
(72) Inventeur: DANGY-CAYE, Nicolas, F-92500 Rueil Malmaison (FR)
(74) Mandataire: Le Guen-Maillet
(86) Numéro de dépôt international: PCT/EP2010/060695
(87) Numéro de publication internationale: WO 2011/012543

(56) Documents cités:
- EP-A- 1 942 607
- US-A- 6 065 123
- US-A1- 2006 194 549
- US-A1- 2009 147 696
- JUNGMEE YUN ET AL: "Designing stand-by gateway for managing a waste of networked home-device power" INTEGRATED NETWORK MANAGEMENT, 2009. IM '09. IFIP/IEEE INTERNATIONAL SYMPOSIUM ON, IEEE, PISCATAWAY, NJ, USA, 1 juin 2009 (2009-06-01), pages 121-124, XP031499085 ISBN: 978-1-4244-3486-2
- WAN-KI PARK ET AL: "Energy Efficient Home Gateway Based on User Service Traffic in Always-On Home Network Environment" ADVANCES IN ELECTRONICS AND MICRO-ELECTRONICS, 2008. ENICS '08. INTERNATIONAL CONFERENCE ON, IEEE, PISCATAWAY, NJ, USA, 29 septembre 2008 (2008-09-29), pages 121-125, XP031345622 ISBN: 978-0-7695-3370-4

## Description

La présente invention concerne un procédé de mise en veille et de réveil d'une passerelle domestique et une passerelle domestique mettant en oeuvre ce procédé.

Une passerelle domestique est un appareil qui permet à un abonné de pouvoir recevoir chez lui, via Internet, des services de type télévision ou VoIP (Voice Over Internet Protocol). Ainsi, après avoir connecté des appareils sur la passerelle domestique, un abonné peut accéder à des sites Internet, échanger des messages électroniques, recevoir des programmes de télévision et/ou téléphoner.

Pour cela, une passerelle domestique doit rester allumée en permanence en particulier pour recevoir d'éventuels appels téléphoniques. Afin d'économiser de l'énergie, l'abonné peut éteindre sa passerelle domestique mais cet abonné sera alors obligé de la rallumer manuellement lors d'une prochaine utilisation, ne lui permettant pas, ainsi, des accès à un réseau de communication externe pour, notamment, enregistrer un programme de télévision ou passer un appel téléphonique.

La demande de brevet EP1942607A2 divulgue une passerelle dans laquelle un composant rentre dans un mode faible consommation lorsque les tâches qu'il a à réaliser sont terminées.

Le document "Designing stand-by gateway for managing a waste of networked home-device power", Jungmee Yun et Al., Integrated network management, 2009. IFIP/IEEE international symposium on IEEE, Piscataway, NJ, USA, premier Juin 2009, P. 121-124, XP031499085, concerne le domaine de la mise en veille de composants d'une passerelle pendant des périodes où le trafic réseau est faible.

Le problème résolu par la présente invention consiste à réduire la consommation d'une passerelle domestique.

A cet effet, la présente invention concerne un procédé de mise en veille et de réveil d'une passerelle domestique, une plage horaire étant mémorisée par la passerelle et la passerelle étant mise en veille à un début de ladite plage horaire et réveillée à une fin de ladite plage horaire, le début de la plage horaire étant décalé de manière aléatoire sur une fenêtre de temps mémorisée, la fenêtre de temps étant récupérée à partir d'un équipement d'un réseau de communication, la fin de ladite plage horaire étant décalée d'une valeur aléatoire obtenue par une fonction pseudo aléatoire et ladite fin décalée est mémorisée et en ce que c'est cette valeur mémorisée qui définit la fin de ladite plage horaire.

Ainsi, un utilisateur peut programmer des plages horaires qui sont alors mémorisées dans la passerelle pour exprimer les périodes pendant lesquelles l'utilisateur n'utilise pas la passerelle et les périodes pendant lesquelles l'utilisateur est susceptible de l'utiliser.

Selon un mode de réalisation, la passerelle bascule dans un mode de consommation nominale, appelé mode ON, lorsqu'elle est réveillée, et dans un mode de basse consommation, appelé mode SLEEP, lorsqu'elle est en veille.

Selon un mode de réalisation, l'alimentation de la passerelle est coupée lorsque la passerelle bascule dans le mode SLEEP et cette alimentation est rétablie lorsque la passerelle bascule dans le mode ON.

Selon un mode de réalisation, la passerelle bascule dans le mode ON lorsqu'une action est exercée sur la passerelle par l'utilisateur ou lorsque la plage horaire arrive à son terme ou si il est détecté une activité sur les interfaces de la passerelle, et dans le mode SLEEP lorsque la plage horaire débute ou lorsqu'une action est exercée sur la passerelle par l'utilisateur ou lorsqu'une inactivité de la passerelle est détectée pendant une période de temps prédéterminée.

Selon un mode de réalisation, la passerelle peut basculer dans trois autres modes de basse consommation, l'un appelé NOPOWER dans lequel il est vérifié si la passerelle est alimentée, un autre appelé STARTUP dans lequel la passerelle redémarre et un autre appelé GETTIME dans lequel l'heure exacte est récupérée, et dans lequel la passerelle mémorise la valeur du mode dans lequel elle fonctionnait juste avant une perte d'alimentation principale.

Selon un mode de réalisation, la passerelle bascule des modes ON, SLEEP, GETTIME ou STARTUP vers le mode NOPOWER si une coupure inopportune du secteur se produit ou si un débranchement intempestif de la passerelle d'une source d'alimentation se produit, du mode NO_POWER vers le mode STARTUP lorsque le secteur n'est pas coupé et la passerelle branchée à une source d'alimentation, du mode GETTIME ou du mode ON vers le mode STARTUP lorsque le processeur principal de la passerelle est bloqué dans une étape d'un processus qu'il est censé exécuter ou lorsque survient un défaut de l'alimentation en tension dérivée des différents composants de la passerelle.

Selon un mode de réalisation, la passerelle bascule du mode STARTUP vers le mode ON si la valeur du mode mémorisée égale ON ou lorsqu'une action est exercée sur la passerelle par l'utilisateur, et vers le mode GETTIME si la valeur du mode mémorisée égale SLEEP et qu'aucune action manuelle n'est exercée par l'utilisateur sur la passerelle, du mode GETTIME vers le mode ON lorsque l'utilisateur exerce une pression courte sur le bouton de marche/arrêt.

Selon un mode de réalisation, la passerelle pilote un voyant qui clignote lorsque la passerelle est dans le mode SLEEP et qui reste allumé en permanence lorsque la passerelle est dans le mode ON.

Selon un mode de réalisation, l'heure exacte est récupérée à partir d'un équipement distant.

Selon son aspect matériel, la présente invention concerne une passerelle domestique comportant un processeur principal, une mémoire, une alimentation principale qui est reliée à une source d'alimentation électrique et qui est destinée à alimenter les composants et autres interfaces de la passerelle, un bouton marche/arrêt, un voyant. La passerelle comporte un micro-processeur alimenté par une alimentation qui est reliée à la source d'alimentation électrique mais qui est distincte de l'alimentation principale, ledit micro-processeur mémorisant des instructions d'un programme mettant en oeuvre le procédé ci-dessus.

L'un des avantages d'une telle passerelle est qu'un micro-processeur basse consommation peut être utilisé du fait que pendant que la passerelle fonctionne dans un mode basse consommation, le micro-processeur ne met en oeuvre qu'un nombre limité de fonctions assurées autrement par le processeur principal. L'alimentation du processeur principal de la passerelle peut ainsi être coupée, optimisant la réduction de la consommation de la passerelle lorsque celle-ci n'a pas lieu d'être alimentée.

Selon un mode de réalisation, la mémoire mémorise la valeur du mode dans lequel la passerelle fonctionnait avant une perte d'alimentation principale.

Selon un mode de réalisation, le micro-processeur est relié à la ligne d'alimentation principale de la passerelle pour détecter une coupure inopportune du secteur ou le débranchement intempestif de la passerelle de la source d'alimentation.

Selon un mode de réalisation, le micro-processeur est relié à une voire plusieurs lignes qui alimentent en tensions dérivées certains composants de la passerelle pour détecter un défaut de valeurs de tensions dérivées.

Selon un mode de réalisation, le micro-processeur est prévu pour émettre périodiquement au processeur principal un signal particulier pour déterminer si le processeur principal est bloqué dans une étape d'un processus qu'il est censé exécuter, et si tel est le cas, le micro-processeur est prévu pour envoyer au processeur principal un signal de ré-initialisation.

Selon un mode de réalisation, le micro-processeur (MCU) est prévu pour distinguer une pression longue d'une pression courte sur le bouton marche/arrêt (ON/OFF).

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente différents modes de réalisation du procédé de mise en veille et de réveil d'une passerelle domestique selon la présente invention,
La Fig. 2 représente une variante de l'un des procédés de la Fig. 1,
La Fig. 3 représente un synoptique d'une architecture interne de la passerelle selon la présente invention, et
La Fig. 4 illustre un mode de réalisation dans la passerelle d'un décalage de la fin d'une plage horaire mémorisée par la passerelle.

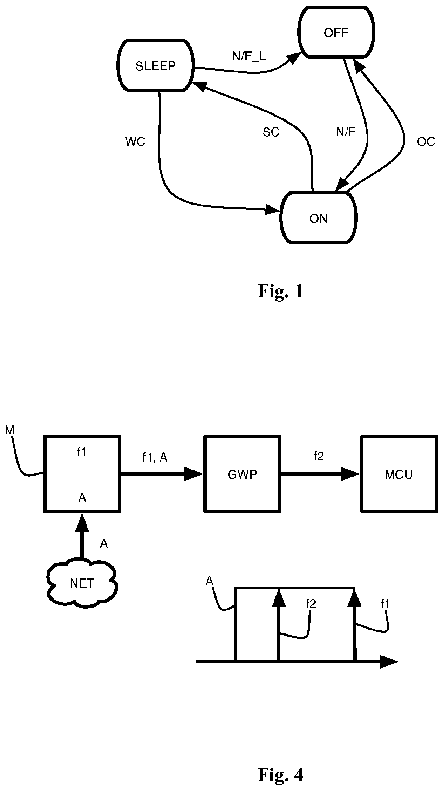

La Fig. 1 représente différents modes de réalisation du procédé de mise en veille et de réveil d'une passerelle domestique selon la présente invention.

Selon ces modes de réalisation, la passerelle domestique fonctionne selon trois modes : ON, SLEEP ou OFF.

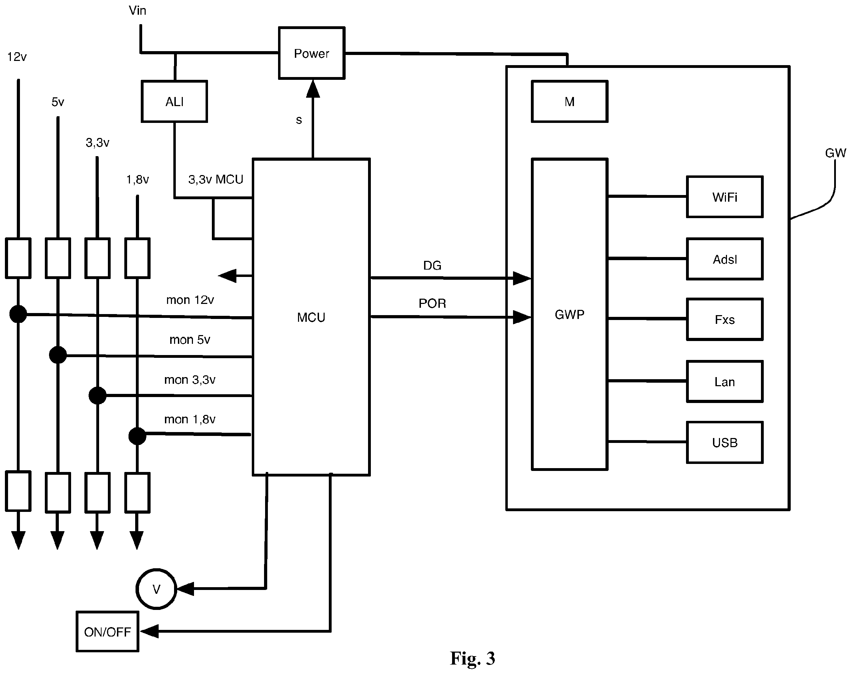

Dans les modes OFF et SLEEP, la passerelle fonctionne dans un mode basse consommation, c'est-à-dire que le processeur principal et autres interfaces qui sont utilisés classiquement par la passerelle et regroupés sous le nom de bloc GW (voir Fig. 3) ne sont pas alimentés électriquement. Selon la Fig. 3, l'alimentation POWER est coupée.

Dans le mode ON, la passerelle fonctionne dans un mode de consommation nominale, c'est-à-dire que le bloc GW est alimenté par l'alimentation POWER.

La passerelle bascule du mode OFF vers le mode ON lorsqu'une action manuelle de l'utilisateur N/F se produit. Par exemple, l'utilisateur exerce une pression courte ou longue sur un bouton marche/arrêt de la passerelle (bouton ON/OFF de la Fig. 3).

La passerelle bascule du mode ON vers le mode OFF lorsqu'une condition d'extinction OC est vérifiée.

Selon un mode de réalisation, la condition OC est vérifiée lorsqu'une action manuelle de l'utilisateur se produit. Par exemple, l'utilisateur exerce une pression longue sur un bouton marche/arrêt de la passerelle.

Selon un autre mode de réalisation, la condition OC est vérifiée lorsqu'une inactivité est détectée par la passerelle pendant une période de temps déterminée.

La passerelle bascule du mode SLEEP vers le mode OFF lorsqu'une autre action manuelle de l'utilisateur N/F_L se produit. Par exemple, l'utilisateur exerce une pression longue sur le bouton marche/arrêt de la passerelle.

La passerelle bascule du mode SLEEP vers le mode ON lorsqu'une condition de réveil WC est vérifiée.

Selon un mode de réalisation, une condition de réveil WC est vérifiée lorsqu'une action est exercée sur la passerelle par l'utilisateur. Par exemple, l'utilisateur exerce une pression courte ou longue sur un bouton marche/arrêt de la passerelle.

Selon autre mode de réalisation, une condition de réveil WC est vérifiée lorsqu'une plage horaire PH mémorisée préalablement par la passerelle arrive à son terme.

Par exemple, lorsque la passerelle bascule dans le mode SLEEP, un compteur NR d'intervalles de temps de même durée I est initialisé à une valeur NRmax calculée à partir de l'heure exacte (par exemple l'heure G.M.T), le début d'une plage horaire PH mémorisée et de la durée I. Ensuite, à l'expiration de chacun de ces intervalles de temps de même durée I, le compteur NR est décrémenté d'une unité. La condition de réveil WC est vérifiée lorsque le compteur NR arrive à zéro.

Selon un mode de réalisation du procédé, si il est détecté une activité sur les interfaces de la passerelle, la passerelle bascule du mode dans lequel elle se trouve vers le mode ON. Ce mode de réalisation est particulièrement avantageux car il permet de préempter le fonctionnement de la passerelle quel que soit le mode dans lequel elle fonctionne à ce moment-là. L'activité d'une des interfaces de la passerelle peut être la détection d'un décroché d'un poste téléphonique ou la négociation du lien Ethernet.

La passerelle bascule du mode ON vers le mode SLEEP lorsqu'une condition de mise en veille SC est vérifiée.

Selon un autre mode de réalisation, une condition SC est vérifiée lorsqu'une plage horaire PH mémorisée par la passerelle débute.

Pour cela par exemple, la passerelle, connaissant l'heure exacte (par exemple l'heure G.M.T), génère une interruption (condition SC) dès que le début d'une plage horaire PH mémorisée est égal à cette heure exacte.

Selon un mode de réalisation, une condition SC est vérifiée lorsqu'une inactivité de la passerelle est détectée pendant une période de temps prédéterminée.

Selon un mode de réalisation, une condition SC est vérifiée lorsqu'une action est exercée sur la passerelle par l'utilisateur. Par exemple, l'utilisateur exerce une pression courte sur un bouton marche/arrêt de la passerelle. Lorsque cette condition de mise en veille est vérifiée, la passerelle annule alors la décrémentation du compteur NR si elle est en cours, c'est-à-dire que la condition SC ainsi vérifiée préempte le compteur NR . Cette préemption peut être suivie d'une reprogrammation des plages horaires et/ou du compteur NR.

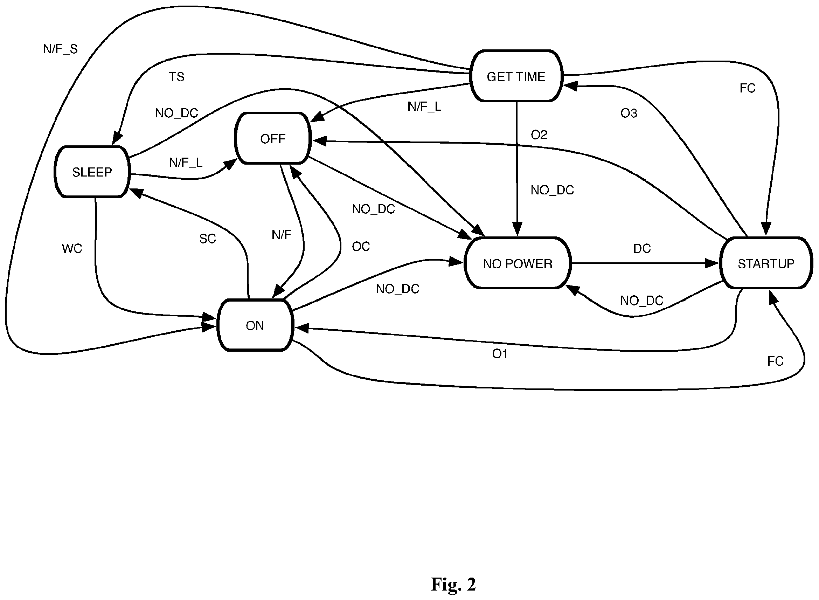

La Fig. 2 représente une variante de l'un des modes de réalisation du procédé de la Fig. 1 qui permet, en plus de mettre en veille et de réveiller la passerelle, de gérer les pertes d'alimentation principale qui se produisent, en particulier, lors d'une coupure inopportune du secteur, d'un débranchement intempestif de la passerelle d'une source d'alimentation, ou d'un défaut de l'alimentation en tension dérivées des différents composants de la passerelle (fonction de contrôle des alimentations dérivées). De plus, cette variante permet de gérer le fonctionnement de son processeur principal GWP de la passerelle (voir Fig. 2) lorsqu'il est bloqué dans une étape d'un processus qu'il est sensé exécuter (fonction appelée watchdog en anglais).

Selon cette variante, la passerelle fonctionne selon trois modes basse consommation supplémentaires: NOPOWER, STARTUP ou GETTIME, et est prévue pour mémoriser le mode dans lequel elle fonctionnait juste avant qu'elle ne soit plus alimentée (perte d'alimentation principale). La valeur de ce mode est sauvegardée par la passerelle sous le nom de SAVE qui peut donc prendre soit la valeur ON, soit OFF soit SLEEP pour désigner que la passerelle fonctionnait alors respectivement dans les modes ON, OFF ou SLEEP.

La passerelle bascule des modes ON, OFF, SLEEP, GETTIME ou STARTUP vers le mode NO_POWER dès qu'une condition NO_DC est vérifiée.

Selon un mode de réalisation, la condition NO_DC est vérifiée si une coupure inopportune du secteur se produit ou si un débranchement intempestif de la passerelle d'une source d'alimentation se produit.

La passerelle bascule du mode NO_POWER dans lequel il est vérifié si la passerelle est à nouveau alimentée vers le mode STARTUP lorsque la condition NO_DC n'est plus vérifiée (condition DC vérifiée).

La passerelle bascule du mode GETTIME ou du mode ON vers le mode STARTUP lorsqu'une condition de défaut de fonctionnement FC est vérifiée.

Selon un mode de réalisation, la condition FC est vérifiée lorsque le processeur principal GWP est bloqué dans une étape d'un processus qu'il est sensé exécuter.

Selon un mode de réalisation, la condition FC est vérifiée lorsque survient un défaut de l'alimentation en tension dérivée des différents composants de la passerelle.

Dans le mode STARTUP, la passerelle tente de redémarrer et si elle y arrive, elle bascule vers le mode ON si une condition O1 est vérifiée, vers le mode OFF si une condition 02 est vérifiée, et vers le mode GETTIME si la condition 03 est vérifiée.

Selon un mode de réalisation, la condition O1 est vérifiée si la valeur SAVE égale ON.

Selon un mode de réalisation, la condition O1 est vérifiée lorsqu'une action est exercée sur la passerelle par l'utilisateur. Par exemple, l'utilisateur exerce une pression courte ou longue sur le bouton marche/arrêt de la passerelle.

Selon un mode de réalisation, la condition 02 est vérifiée si la valeur SAVE égale OFF et qu'aucune action manuelle n'est exercée par l'utilisateur sur la passerelle.

Selon un mode de réalisation, la condition 03 est vérifiée si la valeur SAVE égale SLEEP et qu'aucune action manuelle n'est exercée par l'utilisateur sur la passerelle.

Dans le mode GETTIME, la passerelle récupère la valeur exacte de l'heure, et recalcule la valeur NRmax à partir de la fin de la plage horaire PH qui est en cours, à partir de l'heure exacte (par exemple l'heure G.M.T) et de la durée I.

Le compteur NR est alors initialisé à NRmax (condition TS vérifiée) et la passerelle bascule alors du mode GETTIME vers le mode SLEEP.

Les opérations réalisées au cours du mode GETTIME peuvent être pré-emptées par une action manuelle de l'utilisateur sur la passerelle telle que par exemple par pression sur le bouton de marche/arrêt.

Selon un mode de réalisation, la passerelle bascule du mode GETTIME vers le mode ON lorsque l'utilisateur exerce une pression courte sur le bouton de marche/arrêt (condition N/F_S) et vers le mode OFF lorsque cette pression est longue (condition N/F_L).

Selon une autre caractéristique, la passerelle pilote un voyant V, par exemple une LED, qu'elle fait clignoter lorsque la passerelle est dans le mode SLEEP, qu'elle laisse éteinte lorsque la passerelle est dans le mode OFF et qu'elle laisse allumé en permanence lorsque la passerelle est dans le mode ON.

A la Fig.3, une passerelle domestique selon la présente invention est schématiquement représentée. La passerelle comporte un bloc GW qui met en oeuvre les fonctions classiques d'une passerelle domestique. Ce bloc comporte, notamment, un processeur principal GWP, une mémoire M et des moyens et autres interfaces pour communiquer soit avec des appareils domestiques soit avec un équipement distant d'un réseau de communication local ou externe à l'installation domestique selon différents protocoles (WiFi, Adsl, Fxs, Lan, USB,...). La passerelle domestique comporte également une alimentation POWER dont la fonction est d'alimenter les composants et autres interfaces du bloc GW en énergie électrique. Lorsque l'alimentation POWER est alimentée par une source de tension référencée Vin, typiquement 12v, la passerelle domestique fonctionne en mode de consommation nominale. Lorsque l'alimentation POWER est coupée, la passerelle domestique fonctionne en mode basse consommation.

La passerelle comporte également un bouton marche/arrêt ON/OFF et un voyant V tel que par exemple une LED.

Selon une caractéristique, la passerelle comporte un micro-processeur MCU alimenté par une alimentation propre reliée à la source d'alimentation Vin mais qui est distincte de l'alimentation POWER. Ainsi, l'alimentation du bloc GW peut être coupée et rétablie indépendamment de l'alimentation du micro-processeur.

Selon une autre caractéristique, une mémoire de la passerelle, par exemple la mémoire M, comporte des instructions d'un programme pour mettre en oeuvre l'un des procédés décrits en relation avec les Fig. 1 et 2. Ces instructions, exécutées par le micro-processeur MCU, requièrent des échanges d'informations avec un équipement distant EQ d'un réseau de communication externe (non représenté), la mémoire M, le processeur principal GWP, le bouton ON/OFF, le voyant V, l'alimentation POWER et l'alimentation en tension dérivées des différents composants de la passerelle.

La mémoire M mémorise au moins une plage horaire PH. Cette plage horaire PH est programmée par l'utilisateur au travers, par exemple, d'une interface de la passerelle ou à partir d'un équipement distant qui communique alors la plage horaire PH à la passerelle domestique qui la mémorise dans la mémoire M.

Le micro-processeur MCU gère le compteur NR et génère une condition WC selon sa valeur, tel que expliqué précédemment.

Selon un mode de réalisation, le processeur principal GWP récupère le début de la plage horaire PH et la durée I pour calculer la valeur NRMax qu'il envoie alors au micro-processeur MCU.

Selon un mode de réalisation, la mémoire M mémorise la durée I.

Selon un mode de réalisation, la passerelle comporte des moyens pour mémoriser dans une mémoire, par exemple la mémoire M, le mode dans lequel la passerelle fonctionnait avant une perte d'alimentation principale (valeur SAVE).

Le micro-processeur MCU est relié à l'alimentation POWER afin de lui envoyer un signal binaire s qui pilote sa valeur de sortie. Lorsque le signal s est à 0, la sortie de l'alimentation POWER est également à 0 et le bloc GW n'est plus alimenté. Lorsque le signal s est à 1, la sortie de l'alimentation POWER est également à 1 et le bloc GW est alimenté.

Le micro-processeur MCU est relié à la ligne d'alimentation principale de la passerelle pour détecter une coupure inopportune du secteur ou le débranchement intempestif de la passerelle de la source d'alimentation.

Par exemple, si cette tension est inférieure à 11,1v (seuil de détection de coupure), le micro-processeur génère le signal DG à un niveau bas indiquant ainsi au processeur principal GWP une perte d'alimentation. Dans le cas où la tension est supérieure à 11,1v (tension requise suffisante), le micro-processeur génère le signal DG à un niveau haut indiquant ainsi au processeur principal GWP que la passerelle est branchée à une source d'alimentation suffisante (fonction dying gasp). Selon l'exemple de la Fig. 3, l'entrée référencée 'mon 12V' est l'entrée du micro-processeur qui récupère une tension au travers d'un pont de résistances qui permet d'abaisser le seuil de 11,1v à 0,6v par exemple.

Le micro-processeur MCU est relié à une voire plusieurs lignes qui alimentent en tensions dérivées certains composants de la passerelle pour détecter un défaut de valeurs de tensions dérivées.

A la Fig. 3, trois tensions dérivées sont ainsi contrôlées par le micro-processeur MCU qui récupère sur ses entrées référencées 'mon 5v', 'mon 3,3v' et 'mon 1,8v' au travers de pont de résistances. Le micro-processeur est alors prévu pour comparer chacune des tensions délivrées sur ces entrées par rapport à un seuil et ainsi détecter un défaut de l'alimentation en tension dérivée des différents composants de la passerelle.

Le micro-processeur est prévu pour émettre périodiquement au processeur principal GWP un signal particulier (du type « are you alive » ?) pour déterminer si le processeur principal GWP est bloqué dans une étape d'un processus qu'il est sensé exécuter. Si tel est le cas, le micro-processeur MCU envoie au processeur principal GWP un signal de ré-initialisation POR (Power On Reset).

Le micro-processeur est également relié au voyant V pour piloter son fonctionnement tel que décrit précédemment.

Le micro-processeur MCU est relié au bouton ON/OFF afin de récupérer un signal lorsque une pression est exercée par l'utilisateur sur ce bouton.

Selon un mode de réalisation, le micro-processeur MCU est prévu pour distinguer une pression longue d'une pression courte sur le bouton ON/OFF. Par exemple, une pression sur le bouton ON/OFF est considérée courte lorsque la durée de cette pression est inférieure à 3,5s et est considérée longue si cette durée excède 3,5s.

Selon un mode de réalisation, le processeur principal détecte une nouvelle activité ou une inactivité de la passerelle par détection d'une activité ou de l'inactivité des interfaces de communication.

Selon un mode de réalisation, l'équipement distant EQ, à partir duquel la passerelle récupère l'heure exacte est un serveur NTP. La valeur exacte est par exemple récupérée à travers une session Adsl.

La passerelle de la Fig. 3 permet donc à un abonné de pouvoir programmer sa mise en veille lorsque cet abonné n'a pas prévu d'utiliser la passerelle (par exemple la nuit) mais également son réveil (*a priori* le matin). Ainsi, une passerelle, dès son réveil, émet une requête à un serveur d'accès (également appelé serveur large bande) pour qu'une nouvelle session de communication s'établisse entre un appareil domestique et un équipement via le réseau de communication externe.

Les passerelles selon la présente invention induisent donc un problème de concomitance des requêtes au niveau des serveurs d'accès car les abonnés risquent de programmer la même heure de réveil de leurs passerelles (par exemple 7H du matin). Cette concomitance des requêtes risque alors de provoquer la chute des serveurs d'accès et ainsi interdire toute connexion avec le réseau pour l'ensemble des abonnés qui dépendent de ces serveurs d'accès.

Pour pallier ce problème, le début d'une plage horaire PH est étalé de manière aléatoire sur une fenêtre de temps A donné. Ainsi, lorsque le procédé fait appel, pour la première fois, à la fin de la plage horaire mémorisée PH, cette valeur de temps est décalée d'une valeur aléatoire. La nouvelle fin de la plage horaire PH ainsi modifiée est alors mémorisée et le procédé fait alors référence à cette valeur modifiée chaque fois qu'il a besoin de connaître la fin de la plage horaire PH.

La Fig. 4 donne un schéma qui illustre un mode de réalisation dans la passerelle de ce décalage de la fin d'une plage horaire PH mémorisée par la passerelle.

La fenêtre de temps A est ici récupérée à partir d'un équipement d'un réseau de communication NET. Par exemple, cette fenêtre de temps A est donnée par le fournisseur d'accès qui peut ainsi contrôler la capacité de ses serveurs d'accès en dimensionnant la fenêtre de temps A. La mémoire mémorise cette fenêtre de temps A. Lorsque le processeur principal GWP récupère la fin f1 de la plage horaire PH mémorisée par la passerelle, il récupère également la fenêtre de temps A. Cette valeur est modifiée (f2) d'une valeur aléatoire avant d'être envoyée au micro-processeur MCU.

Ce décalage aléatoire des temps de fin de plage horaire PH est mis en oeuvre dans la passerelle par une fonction pseudo aléatoire exécutée par le processeur principal GWP.

## Revendications

1. Procédé de mise en veille et de réveil d'une passerelle domestique, une plage horaire étant mémorisée par la passerelle et la passerelle étant mise en veille à un début de ladite plage horaire et réveillée à une fin de ladite plage horaire, le début de la plage horaire étant décalé de manière aléatoire sur une fenêtre de temps (A) mémorisée, la fenêtre de temps (A) étant récupérée à partir d'un équipement d'un réseau de communication (NET) **caractérisé en ce que** la fin (f1) de ladite plage horaire est décalée d'une valeur aléatoire obtenue par une fonction pseudo aléatoire et ladite fin décalée (f2) est mémorisée et **en ce que** c'est cette valeur mémorisée qui définit la fin de ladite plage horaire.

2. Procédé selon la revendication 1, dans lequel la passerelle bascule dans un mode de consommation nominale, appelé mode ON, lorsqu'elle est réveillée, et dans un mode de basse consommation, appelé mode SLEEP, lorsqu'elle est en veille.

3. Procédé selon la revendication 2, dans lequel l'alimentation de la passerelle (POWER) est coupée lorsque la passerelle bascule dans le mode SLEEP et cette alimentation est rétablie lorsque la passerelle bascule dans le mode ON.

4. Procédé selon la revendication 2 ou 3, dans lequel la passerelle bascule dans le mode ON lorsqu'une action est exercée sur la passerelle par l'utilisateur ou lorsque la plage horaire arrive à son terme ou si il est détecté une activité sur les interfaces de la passerelle, et dans le mode SLEEP lorsque la plage horaire débute ou lorsqu'une action est exercée sur la passerelle par l'utilisateur ou lorsqu'une inactivité de la passerelle est détectée pendant une période de temps prédéterminée.

5. Procédé selon l'une des revendications 2 à 4, dans lequel la passerelle peut basculer dans trois autres modes de basse consommation, l'un appelé NOPOWER dans lequel il est vérifié si la passerelle est alimentée, un autre appelé STARTUP dans lequel la passerelle redémarre et un autre appelé GETTIME dans lequel l'heure exacte est récupérée, et dans lequel la passerelle mémorise la valeur du mode dans lequel elle fonctionnait juste avant une perte d'alimentation principale.

6. Procédé selon la revendication 5, dans lequel la passerelle bascule des modes ON, SLEEP, GETTIME ou STARTUP vers le mode NOPOWER si une coupure inopportune du secteur se produit ou si un débranchement intempestif de la passerelle d'une source d'alimentation se produit, du mode NO_POWER vers le mode STARTUP lorsque le secteur n'est pas coupé et la passerelle branchée à une source d'alimentation, du mode GETTIME ou du mode ON vers le mode STARTUP lorsque le processeur principal (GWP) de la passerelle est bloqué dans une étape d'un processus qu'il est sensé exécuter ou lorsque survient un défaut de l'alimentation en tension dérivée des différents composants de la passerelle.

7. Procédé selon la revendication 6, dans lequel la passerelle bascule du mode STARTUP vers le mode ON si la valeur du mode mémorisée égale ON ou lorsqu'une action est exercée sur la passerelle par l'utilisateur, et vers le mode GETTIME si la valeur du mode mémorisée égale SLEEP et qu'aucune action manuelle n'est exercée par l'utilisateur sur la passerelle, du mode GETTIME vers le mode ON lorsque l'utilisateur exerce une pression courte sur le bouton de marche/arrêt.

8. Procédé selon l'une des revendications 2 à 7, dans lequel la passerelle pilote un voyant (V) qui clignote lorsque la passerelle est dans le mode SLEEP et qui reste allumé en permanence lorsque la passerelle est dans le mode ON.

9. Procédé selon l'une des revendications 1 à 8, dans lequel l'heure exacte est récupérée à partir d'un équipement distant.

10. Passerelle domestique comportant un processeur principal (GWP), une mémoire (M), une alimentation principale (POWER) qui est reliée à une source d'alimentation électrique (Vin) et qui est destinée à alimenter les composants et autres interfaces de la passerelle, un bouton marche/arrêt (ON/OFF), un voyant (V), **caractérisée en ce qu'**elle comporte un micro-processeur (MCU) alimenté par une alimentation (ALI) qui est reliée à la source d'alimentation électrique (Vin) mais qui est distincte de l'alimentation principale (POWER), ledit micro-processeur (MCU) mémorisant des instructions d'un programme mettant en oeuvre un procédé conforme à l'une des revendications 1 à 9.

11. Passerelle selon la revendication 10, dans laquelle la mémoire mémorise la valeur du mode dans lequel la passerelle fonctionnait avant une perte d'alimentation principale.

12. Passerelle selon la revendication 10 ou 11, dans laquelle le micro-processeur (MCU) est relié à la ligne d'alimentation principale de la passerelle pour détecter une coupure inopportune du secteur ou le débranchement intempestif de la passerelle de la source d'alimentation.

13. Passerelle selon l'une des revendications 10 à 12, dans laquelle le micro-processeur (MCU) est relié à une voire plusieurs lignes qui alimentent en tensions dérivées certains composants de la passerelle pour détecter un défaut de valeurs de tensions dérivées.

14. Passerelle selon l'une des revendications 10 à 13, dans laquelle le micro-processeur (MCU) est prévu pour émettre périodiquement au processeur principal (GWP) un signal particulier pour déterminer si le processeur principal (GWP) est bloqué dans une étape d'un processus qu'il est sensé exécuter, et si tel est le cas, le micro-processeur (MCU) est prévu pour envoyer au processeur principal (GWP) un signal de ré-initialisation (POR).

15. Passerelle selon l'une des revendications 10 à 14, dans laquelle le micro-processeur (MCU) est prévu pour distinguer une pression longue d'une pression courte sur le bouton marche/arrêt (ON/OFF).

## Patentansprüche

1. Verfahren zum Versetzen eines Home-Gateways in den Bereitschafts- und Wachzustand, wobei ein Zeitbereich vom Gateway gespeichert wird, und das Gateway an einem Anfang des Zeitbereichs in den Bereitschaftszustand versetzt und an einem Ende des Zeitbereichs aufgeweckt wird, wobei der Beginn des Zeitbereichs zufällig in ein gespeichertes Zeitfenster (A) verschoben wird, wobei das Zeitfenster (A) ausgehend von einer Ausrüstung eines Kommunikationsnetzes (NET) abgerufen wird, **dadurch gekennzeichnet, dass** das Ende (f1) des Zeitbereichs um einen Zufallswert verschoben wird, der durch eine pseudozufällige Funktion erhalten wird, und das verschobene Ende (f2) gespeichert wird, und dass es dieser gespeicherte Wert ist, der das Ende des Zeitbereichs definiert.

2. Verfahren nach Anspruch 1, wobei das Gateway in eine Nennverbrauch-Betriebsart, ON-Betriebsart genannt, wenn es wach ist, und in eine Betriebsart niedrigen Verbrauchs, SLEEP-Betriebsart genannt, umschaltet, wenn es im Bereitschaftszustand ist.

3. Verfahren nach Anspruch 2, wobei die Versorgung des Gateways (POWER) unterbrochen wird, wenn das Gateway in die SLEEP-Betriebsart umschaltet, und diese Versorgung wiederhergestellt wird, wenn das Gateway in die ON-Betriebsart umschaltet.

4. Verfahren nach Anspruch 2 oder 3, wobei das Gateway in die ON-Betriebsart umschaltet, wenn eine Einwirkung vom Benutzer auf das Gateway ausgeübt wird oder wenn der Zeitbereich abläuft oder wenn eine Aktivität an den Schnittstellen des Gateways erfasst wird, und in die SLEEP-Betriebsart umschaltet, wenn der Zeitbereich beginnt oder wenn eine Einwirkung vom Benutzer auf das Gateway ausgeübt wird oder wenn eine Inaktivität des Gateways während eines vorbestimmten Zeitraums erfasst wird.

5. Verfahren nach einem der Ansprüche 2 bis 4, wobei das Gateway in drei andere Betriebsarten niedrigen Verbrauchs umschalten kann, eine NOPOWER genannte, bei der überprüft wird, ob das Gateway versorgt wird, eine weitere STARTUP genannte, bei der das Gateway neu startet, und eine weitere GETTIME genannte, bei der die genau Uhrzeit festgestellt wird, und wobei das Gateway den Wert der Betriebsart speichert, in der es kurz vor einem Hauptversorgungsverlust arbeitete.

6. Verfahren nach Anspruch 5, wobei das Gateway von den Betriebsarten ON, SLEEP, GETTIME oder STARTUP in die NOPOWER-Betriebsart umschaltet, wenn eine unzeitige Unterbrechung des Netzes auftritt oder wenn eine unbeabsichtigte Abschaltung des Gateways von einer Versorgungsquelle auftritt, von der NOPOWER-Betriebsart in die STARTUP-Betriebsart umschaltet, wenn das Netz nicht unterbrochen und das Gateway an eine andere Versorgungsquelle angeschlossen ist, von der GETTIME-Betriebsart oder von der ON-Betriebsart in die STARTUP-Betriebsart umschaltet, wenn der Hauptprozessor (GWP) des Gateways in einem Schritt eines Prozesses blockiert ist, den er ausführen soll, oder wenn eine Störung der Versorgung der verschiedenen Komponenten des Gateways mit Driftspannung auftritt.

7. Verfahren nach Anspruch 6, wobei das Gateway von der STARTUP-Betriebsart in die ON-Betriebsart umschaltet, wenn der Wert der gespeicherten Betriebsart gleich ON ist oder wenn eine Einwirkung vom Benutzer auf das Gateway ausgeübt wird, und in die GETTIME-Betriebsart umschaltet, wenn der gespeicherte Wert der Betriebsart gleich SLEEP ist und keine manuelle Einwirkung vom Benutzer auf das Gateway ausgeübt wird, von der GETTIME-Betriebsart in die ON-Betriebsart umschaltet, wenn der Benutzer einen kurzen Druck auf die Ein/Aus-Taste ausübt.

8. Verfahren nach einem der Ansprüche 2 bis 7, wobei das Gateway eine Leuchtanzeige (V) steuert, die blinkt, wenn das Gateway in der SLEEP-Betriebsart ist, und die durchgehend leuchtet, wenn das Gateway in der ON-Betriebsart ist.

9. Verfahren nach einem der Ansprüche 1 bis 8, wobei die genaue Uhrzeit ausgehend von einer fernen Ausrüstung erlangt wird.

10. Home-Gateway, das einen Hauptprozessor (GWP), einen Speicher (M), eine Hauptversorgung (POWER), die mit einer Stromversorgungsquelle (Vin) verbunden und dazu bestimmt ist, die Komponenten und anderen Schnittstellen des Gateways zu versorgen, eine Ein/Aus-Taste (ON/OFF), eine Leuchtanzeige (V) aufweist, **dadurch gekennzeichnet, dass** es einen Mikroprozessor (MCU) aufweist, der von einer Versorgung (ALI) versorgt wird, die mit der Stromversorgungsquelle (Vin) verbunden ist, sich aber von der Hauptversorgung (POWER) unterscheidet, wobei der Mikroprozessor (MCU) Anweisungen eines Programms speichert, das ein Verfahren nach einem der Ansprüche 1 bis 9 durchführt.

11. Gateway nach Anspruch 10, wobei der Speicher den Wert der Betriebsart speichert, in der das Gateway vor einem Hauptversorgungsverlust arbeitete.

12. Gateway nach Anspruch 10 oder 11, wobei der Mikroprozessor (MCU) mit der Hauptversorgungsleitung des Gateways verbunden ist, um eine unzeitige Unterbrechung des Netzes oder die unbeabsichtigte Abschaltung des Gateways von der Versorgungsquelle zu erfassen.

13. Gateway nach einem der Ansprüche 10 bis 12, wobei der Mikroprozessor (MCU) mit einer oder sogar mehreren Leitungen verbunden ist, die bestimmte Komponenten des Gateways mit Driftspannungen versorgen, um einen Fehler von Driftspannungswerten zu erfassen.

14. Gateway nach einem der Ansprüche 10 bis 13, wobei der Mikroprozessor (MCU) vorgesehen ist, periodisch ein bestimmtes Signal an den Hauptprozessor (GWP) zu senden, um festzustellen, ob der Hauptprozessor (GWP) in einem Schritt eines Prozesses blockiert ist, den er ausführen soll, und wenn dies der Fall ist, der Mikroprozessor (MCU) vorgesehen ist, an den Hauptprozessor (GWP) ein Reset-Signal (POR) zu senden.

15. Gateway nach einem der Ansprüche 10 bis 14, wobei der Mikroprozessor (MCU) vorgesehen ist, einen langen Druck von einem kurzen Druck auf die Ein/Aus-Taste (ON/OFF) zu unterscheiden.

## Claims

1. Method for putting into standby and waking up a home gateway, a timeslot being stored by the gateway and the gateway being put into standby at a beginning of said timeslot and woken up at an end of said timeslot, the beginning of the timeslot being randomly staggered over a stored time window (A), the time window (A) being retrieved from a device of a communication network (NET), **characterized in that** the end (f1) of said timeslot is staggered by a random value obtained by a pseudorandom function and said staggered end (f2) is stored and **in that** it is this stored value that defines the end of said timeslot.

2. Method according to Claim 1, in which the gateway toggles to a nominal consumption mode, called ON mode, when it is woken up, and to a low consumption mode, called SLEEP mode, when it is in standby.

3. Method according to Claim 2, in which the supply of power to the gateway (POWER) is cut off when the gateway toggles to the SLEEP mode and this supply of power is restored when the gateway toggles to the ON mode.

4. Method according to Claim 2 or 3, in which the gateway toggles to the ON mode when an action is taken on the gateway by the user or when the timeslot reaches its end or if an activity is detected on the interfaces of the gateway, and to the SLEEP mode when the timeslot begins or when an action is taken on the gateway by the user or when an inactivity by the gateway is detected during a predetermined time period.

5. Method according to one of Claims 2 to 4, in which the gateway can toggle to three other low consumption modes, one called NOPOWER, in which a check is performed to determine whether the gateway is supplied with power, another called STARTUP, in which the gateway restarts, and another called GETTIME, in which the exact time is retrieved, and in which the gateway stores the value of the mode in which it was operating just before a loss of main power.

6. Method according to Claim 5, in which the gateway toggles from the ON, SLEEP, GETTIME or STARTUP modes to the NOPOWER mode if the mains is cut off inconveniently or if the gateway is disconnected from a power source in untimely fashion, from the NO_POWER mode to the STARTUP mode when the mains is not cut off and the gateway connected to a power source, from the GETTIME mode or from the ON mode to the STARTUP mode when the main processor (GWP) of the gateway is frozen in a step of a process that it is supposed to execute or when a fault occurs in the supply of derived voltage to the various components of the gateway.

7. Method according to Claim 6, in which the gateway toggles from the STARTUP mode to the ON mode if the stored value of the mode equals ON or when an action is taken on the gateway by the user, and to the GETTIME mode if the stored value of the mode equals SLEEP and no manual action is taken by the user on the gateway, from the GETTIME mode to the ON mode when the user performs a short press on the on/off button.

8. Method according to one of Claims 2 to 7, in which the gateway controls an indicator light (V) that flashes when the gateway is in the SLEEP mode and that remains permanently lit when the gateway is in the ON mode.

9. Method according to one of Claims 1 to 8, in which the exact time is retrieved from a remote device.

10. Home gateway having a main processor (GWP), a memory (M), a main power supply (POWER) that is connected to an electric power source (Vin) and that is intended to supply power to the components and other interfaces of the gateway, an on/off button (ON/OFF), and an indicator light (V), **characterized in that** it has a microprocessor (MCU) supplied with power by a power supply (ALI) that is connected to the electric power source (Vin) but that is separate from the main power supply (POWER), said microprocessor (MCU) storing instructions of a program implementing a method according to one of Claims 1 to 9.

11. Gateway according to Claim 10, in which the memory stores the value of the mode in which the gateway was operating before a loss of main power.

12. Gateway according to Claim 10 or 11, in which the microprocessor (MCU) is connected to the main power supply line of the gateway in order to detect inconvenient cutoff of the mains or untimely disconnection of the gateway from the power source.

13. Gateway according to one of Claims 10 to 12, in which the microprocessor (MCU) is connected to one or more lines that supply derived voltages to some components of the gateway in order to detect a fault in derived voltage values.

14. Gateway according to one of Claims 10 to 13, in which the microprocessor (MCU) is intended to periodically transmit a particular signal to the main processor (GWP) in order to determine whether the main processor (GWP) is frozen in a step of a process that it is supposed to execute, and if this is the case, the microprocessor (MCU) is intended to send a reset signal (POR) to the main processor (GWP).

15. Gateway according to one of Claims 10 to 14, in which the microprocessor (MCU) is intended to distinguish a long press from a short press on the on/off button (ON/OFF).
